# EUROPÄISCHE PATENTSCHRIFT

(11) **EP 4 460 393 B1**
(45) Veröffentlichungstag und Bekanntmachung des Hinweises auf die Patenterteilung: **03.09.2025**
(21) Anmeldenummer: 23700418.9
(22) Anmeldetag: 04.01.2023
(51) Int. Cl.: B01J 19/18, B01J 19/08

(54) **VORRICHTUNG ZUR UNTERSUCHUNG ELEKTROKATALYTISCHER REAKTIONEN**
DEVICE FOR INVESTIGATING ELECTROCATALYTIC REACTIONS
DISPOSITIF D'EXAMEN DES RÉACTIONS ÉLECTROCATALYTIQUES

(30) Priorität: 05.01.2022 EP 22150324
(43) Veröffentlichungstag der Anmeldung: 13.11.2024
(73) Patentinhaber: HTE GmbH The High Throughput Experimentation Company, 69123 Heidelberg (DE)
(72) Erfinder: RESCH, Stefan Guenter, 72663 Grossbettlingen (DE); MUELLER, Andreas, 69123 Heidelberg (DE); SCHUNK, Stephan A., 69123 Heidelberg (DE); SCHNEIDER, Fabian, 69123 Heidelberg (DE); DEJMEK, Michael, 69123 Heidelberg (DE); KUPPINGER, Ralf, 69123 Heidelberg (DE); KOECHEL, Oliver, 69123 Heidelberg (DE)
(74) Vertreter: BASF IP Association
(86) Internationale Anmeldenummer: PCT/EP2023/050110
(87) Internationale Veröffentlichungsnummer: WO 2023/131620

(56) Entgegenhaltungen:
- EP-A1- 2 830 138
- WO-A2-93/04363
- CN-A- 113 171 717
- US-A1- 2009 272 650

## Beschreibung

Die Erfindung geht aus von einer Vorrichtung zur Untersuchung elektrokatalytischer Reaktionen in der Flüssigphase, umfassend einen Behälter mit einem Rührer als Reaktionsbehälter.

Zur Untersuchung chemischer Reaktionen ist es aus der Verfahrenstechnik bekannt, standardisierte Reaktortypen wie Strömungsrohre oder Rührkessel zunächst im Labormaßstab einzusetzen und die dort gewonnenen Erkenntnisse auf Pilotanlagen oder großtechnische Anlagen hochzuskalieren (Upscaling). Herkömmliche Energietransferprozesse beschränken sich dabei im Allgemeinen auf die Temperierung der Medien und nicht mit der direkten energetischen Umsetzung in energiereichere chemische Produkte. Die direkte energetische Umsetzung erfordert neue Bauformen, die sich daran orientieren müssen, dass sie vergleichbare und auch upscalefähige Bauarten anbieten. Ein Beispiel für eine energetische Umsetzung in energiereichere chemische Produkte ist die Konversion von Kohlendioxid im überkritischen Zustand zu energiezwischenspeichernden Basisprodukten wie Oxalsäure, Ameisensäure oder Formaldehyd, wenn beispielsweise Lastspitzen aus Windenergie oder Solarzellen abzufangen sind. Sobald Gase an der Umsetzung beteiligt sind, ist es sinnvoll, den Prozess mit einer hohen Massen- oder Massenstrombelastung unter Hochdruck in dafür geeigneten Autoklaven durchzuführen. Besonders geeignet sind dabei einphasige Prozesszustände, die ideale Stoffübergangsbedingungen anbieten.

Für heterogen katalysierte Reaktionen ist es zum Beispiel bekannt, den Katalysator in Körben zu immobilisieren. Hierbei können die Körbe entweder stationär im Reaktor positioniert werden oder dynamisch angeordnet sein. Stationäre Einbauten der Körbe sind zum Beispiel in einem Berty-Reaktor, einem Robinson-Mahoney-Reaktor oder einem Caldwell-Reaktor realisiert. Demgegenüber stehen Carberry-Reaktoren, bei denen der Katalysatorkorb mit einer Rotationsachse verbunden ist, so dass die Katalysatorkörbe im Reaktionsbehälter rotieren.

Elektrokatalysatoren erleichtern oder ermöglichen chemische Reaktionen analog zu heterogenen Katalysatoren. Zusätzlich zu oberflächenaktiven Vorgängen an Katalysatoren, mit denen die Aktivierungsenergie für eine chemische Umsetzung erniedrigt wird, können Elektrokatalysatoren die Aktivierungsenergie zusätzlich erniedrigen durch Anlegen eines elektrischen Potentials. Damit können im Prinzip alle chemischen Reaktionen, für die ein geeigneter Elektrolyt gefunden werden kann, auch elektrokatalytisch umgesetzt werden. Beispiele, bei denen das geschieht, sind Elektrolyseverfahren, beispielsweise Chloralkalielektrolyse, Wasserelektrolyse, Brennstoffzellen, Metallabscheidung durch Reduktion von Metallsalzen, Batterien, Elektrodialyse, galvanotechnische Abscheidungen, organische Synthesen wie die Dimerisierung von Acrylnitril zu Adiponitril, Kolbe-Elektrolyse, anorganische Synthesen und auch photoelektrochemische Prozesse, beispielsweise in einer Photogenerationszelle oder Grätzelzelle. Betriebsweisen können dabei potentiostatisch oder galvanostatisch erfolgen.

US-A 2016/0256847 beschreibt einen Zentrifugalreaktor mit einem Rotor mit radial ausgerichteten Rotorblättern, die radiale Kammern bilden. Ein für die Reaktion eingesetzter Katalysator wird in den radialen Kammern aufgenommen. Alternativ kann der Rotor auch eine ringförmige Bürste aus einem faserförmigen Katalysator sein. Um ein elektrisches Feld anzulegen umfasst der Rotor zwei Scheiben, die elektrisch kontaktiert werden.

Aus DE-U 20 2020 107 313 ist eine Vorrichtung zur Untersuchung chemischer Prozesse bekannt, die einen Stapelplattenreaktor mit mehreren nebeneinanderliegenden plattenförmigen Bausteinen aufweist. Diese weisen jeweils einen Zulauf und einen Ablauf auf und die einzelnen Platten können wechselweise als Anode und als Kathode geschaltet werden, um ein elektrisches Feld anzulegen.

EP-A-2 830 138 offenbart eine Vorrichtung mit einem Rührer und zwei Elektroden. Nachteil der aus dem Stand der Technik bekannten Reaktoren zur Untersuchung von chemischen Prozessen ist, dass diese jeweils kontinuierlich betrieben werden, indem die Edukte kontinuierlich zugeführt werden, sich im Reaktor ein Reaktionsgemisch bildet, indem die Edukte zumindest teilweise zu einem Produkt umgesetzt werden und das Reaktionsgemisch dann kontinuierlich aus dem Reaktor entnommen wird. Mit derartigen Reaktoren lassen sich jedoch keine Reaktionen untersuchen, die in Rührkesselreaktoren durchgeführt werden. Insbesondere lassen sich Reaktionen mit längeren Verweilzeiten, die üblicherweise im Batch-Verfahren durchgeführt werden, nicht mit den bekannten Reaktoren nachstellen.

Insbesondere zur Untersuchung von elektrokatalytischen Reaktionen in Batch-Reaktoren, insbesondere Rührkesselreaktoren, ist es notwendig, Elektroden so einzubringen, dass ein gleichmäßiger Kontakt der Komponenten im Reaktor mit den Elektroden sichergestellt wird. Batch-Reaktoren haben üblicherweise einen Reaktorbehälter, der ein Volumenkörper ist, der eine flächige Kontaktierung der in ihm enthaltenen Medien mit in der Regel flächigen Elektroden erschwert. Auch ist für ein Upscaling der mit einem solchen Reaktor gewonnenen Ergebnisse auf eine Pilotanlage oder eine Großanlage für die Produktion die Einstellung reproduzierbarer Größen wie die tatsächlich genutzte Elektrodenfläche, die Einstellung exakt paralleler Elektrodenabstände und die definierte Strömungsausbildung auf der Oberfläche der Elektroden erforderlich.

Da für die Untersuchung von Reaktionen auch ein schneller Austausch von Komponenten oder Anlagenbauteilen, insbesondere von Elektroden notwendig ist, ist weiterhin eine gute Zugänglichkeit und ein leichter Austausch ohne anschließend notwendige Neukalibrierung oder Ausrichtung der Teile wünschenswert.

Aufgabe der vorliegenden Erfindung war es daher, eine Vorrichtung zur Untersuchung elektrokatalytischer Reaktionen, die in Batch-Reaktoren durchgeführt werden und die die aus dem Stand der Technik bekannten Nachteile nicht aufweist.

Gelöst wird die Aufgabe durch eine Vorrichtung zur Untersuchung elektrokatalytischer Reaktionen, umfassend einen Behälter mit einem Rührer als Reaktionsbehälter, wobei der Behälter innen mit einer elektrisch isolierenden Beschichtung ausgekleidet ist oder aus einem elektrisch isolierenden Material gefertigt ist und der Rührer zumindest eine mit einem elektrisch isolierenden Beschichtung versehenen oder aus einem elektrisch isolierenden Material gefertigte Rührerachse aufweist und im Behälter als auswechselbare Körbe ausgeformte Elektroden positioniert sind.

Durch den Einsatz von als auswechselbare Körbe ausgeformten Elektroden in dem Reaktionsbehälter kann ein definierter Kontakt des im Reaktor enthaltenen Mediums mit der Elektrode sichergestellt werden. Auf diese Weise können reproduzierbare Untersuchungen durchgeführt werden und ein mögliches Upscaling auf Pilotanlagen oder großindustrielle Produktionsanlagen wird erleichtert. Auch ermöglicht die Auswechselbarkeit der Körbe einen leichten Austausch, so dass zum Beispiel in Reihenuntersuchungen unterschiedliche Elektrodenmaterialien oder auch unterschiedliche Katalysatoren, die vorzugsweise in dem Korb aufgenommen sind, untersucht werden können. Insbesondere erlauben die als auswechselbare Körbe ausgeformten Elektroden auch eine vereinfachte Untersuchung von Reaktionen, bei denen eine Opferelektrode während der Reaktion aufgebraucht wird, da ein einfacher Austausch möglich ist, wenn die Elektrode bis zu einem bestimmten Anteil aufgebraucht wurde.

Die in der Vorrichtung eingesetzten und den Korb bildenden Elektroden können makroporös, mikroporös oder auch nicht-porös sein. Wenn die Elektroden makroporös sind, sind diese vorzugsweise in Form eines Gewebes oder Geflechts oder auch eines Filzes oder Vlieses. Auch ist es möglich, die Elektroden als Blech mit einer Vielzahl an Öffnungen auszubilden oder in Form eines Schaums. Wenn die Elektroden in Form eines Schaums ausgebildet sind, ist es besonders bevorzugt, wenn der Schaum offenzellig ist, so dass das im Reaktor enthaltene Medium die Elektrode durchströmen kann und zudem eine große Elektrodenoberfläche bereitgestellt wird. Besonders bevorzugt ist jedoch, wenn die Elektroden als Gewebe, Geflecht, Filz oder Vlies ausgebildet sind, insbesondere als Gewebe oder Geflecht. Insbesondere beim Einsatz von offenzelligem Schaum für die Elektroden kann dir Stoff- und Wärmeübergangskoeffizient verbessert werden.

Typische mikroporöse Elektroden sind zum Beispiel Elektroden, wie sie derzeit als Gasdiffusionselektroden oder Sauerstoffverzehrelektroden eingesetzt werden. Im Allgemeinen sind solche Elektroden mikroporöse Membranen oder Sinterelektroden.

Nicht-poröse Elektroden sind alle Elektroden, die eine gas- und/oder flüssigkeitsundurchlässige Oberfläche aufweisen, so dass das im Reaktionsbehälter über die Oberfläche der Elektrode strömt, jedoch nicht in diese eindringen kann oder diese durchströmen kann.

Um ein elektrisches Feld zu erzeugen, ist es notwendig, mindestens eine positive Elektrode und eine mindestens eine negative Elektrode im Reaktionsbehälter einzusetzen, da aufgrund der Beschichtung mit dem elektrisch isolierenden Material oder der Fertigung aus dem elektrisch isolierenden Material weder der Behälter noch die Rührerachse als Elektrode wirken können.

Um homogene Verweilzeiten des Reaktionsmediums an den Elektroden zu erhalten und auch einen leichten Austausch und Einsatz der Elektroden zu ermöglichen und um insbesondere reproduzierbare Ergebnisse zu erhalten und eine genaue und reproduzierbare Positionierung der Elektroden zueinander, ist es bevorzugt, wenn jeweils eine positive und eine negative Elektrode durch elektrisch nicht leitende Verbindungen zu einem Korb verbunden sind. Dies ermöglicht es, die Elektroden außerhalb des Reaktionsbehälters vorzubereiten und Körbe mit identischen Maßen herzustellen, bevor diese in den Reaktionsbehälter eingesetzt werden. Eine Kalibrierung der Elektroden zueinander im Reaktionsbehälter kann damit entfallen. Zudem können die Elektroden außerhalb des Reaktionsbehälters auch sehr viel einfacher zueinander positioniert werden, da diese leichter zugänglich sind als bereits im Reaktionsbehälter eingebaute Elektroden.

Der Zwischenraum zwischen der negativen und der positiven Elektrode, also das Innere des Korbes kann leer oder gefüllt sein. Wenn das Innere des Korbes gefüllt ist, so kann dieses zum Beispiel strömungsführende und/oder wärmeableitende Elemente enthalten. Weiterhin kann das Innere des Korbes auch mit einer Membran, einer Membran mit Stützstruktur oder einer Stützstruktur für den Korb oder mit einem katalytisch aktiven Material gefüllt sein. Das katalytisch aktive Material kann dabei gleichzeitig auch strömungsführend sein.

Strömungsführende Elemente, die im Inneren des Korbes aufgenommen sein können, sind zum Beispiel Turbulenzpromotoren oder Füllkörper, wobei die Füllkörper inert oder katalytisch aktiv sein können.

Neben katalytisch aktiven Füllkörpern kann das katalytisch aktive Material auch als Granulat oder als strukturierte Packung in den Korb eingebracht werden.

Als wärmeableitende Elemente eignen sich alle gut wärmeleitenden Materialien. Diese können ebenfalls in Form von Turbulenzpromotoren oder Füllkörpern in den Korb eingebracht werden. Um die Wärme mit Hilfe der wärmeableitenden Elemente aus dem Reaktorbehälter abführen zu können, ist es notwendig, geeignete Wärmeleiter vorzusehen, die die Wärme über die Wandung des Reaktorbehälters oder bevorzugt über den Deckel des Reaktorbehälters abführen. Geeignete Wärmeleiter sind zum Beispiel Wärmerohre, die auf einer Seite mit den wärmeableitenden Elementen kontaktiert sind und an der anderen Seite die Wärme an die Umgebung oder an ein Temperiermedium abgeben.

Neben dem Einsatz von wärmeableitenden Elementen aus gut wärmeleitenden Materialien ist es auch möglich, von einem Temperiermedium durchströmte Kanäle im Inneren des Korbes anzuordnen. In diesem Fall wird die Wärme, die beispielsweise bei einer exothermen Reaktion entsteht, an das Temperiermedium abgegeben und von diesem aus dem Reaktorbehälter nach außen transportiert. Wenn es notwendig ist, zusätzlich Wärme zuzuführen, kann alternativ auch ein entsprechend heißes Temperiermedium in die durchströmten Kanäle geleitet werden.

Wenn im Korb eine Membran enthalten ist, ist diese besonders bevorzugt ionenleitend und wirkt als Festelektrolyt. Die Membran kann dabei gegenüber den Medien im Reaktor inert sein. Alternativ ist es auch möglich, dass die Membran katalytisch aktiv ist. In diesem Fall ist es zum Beispiel möglich, die Membran aus einem katalytisch aktiven Material zu fertigen oder, bevorzugt, mit einem katalytisch aktiven Material zu beschichten oder katalytisch aktives Material insbesondere in die Poren der Membran einzubringen. Insbesondere bei einem Abstand der den Korb bildenden Elektroden, der größer ist als die Membrandicke, ist es weiterhin bevorzugt, eine Stützstruktur vorzusehen, um die Membran stabil im Korb an ihrer Position zu halten.

Weiterhin ist es auch möglich, dass die Körbe jeweils als doppelwandige Elektroden ausgeführt sind, wobei zwischen den Elektroden eine Trennmembran aufgenommen ist. Hierbei ist es besonders bevorzugt, wenn eine der doppelwandigen Elektroden eine negative Elektrode und eine der doppelwandigen Elektroden eine positive Elektrode ist. Durch die Trennmembran werden die Elektroden elektrisch voneinander isoliert, so dass diese keinen direkten elektrischen Kontakt haben. Alternativ zu einer Schaltung derart, dass eine Elektrode der doppelwandigen Elektroden eine positive Elektrode und die andere Elektrode eine negative Elektrode ist, ist es auch möglich, dass beide Elektroden positive Elektroden oder beide Elektroden negative Elektroden sind. In diesem Fall ist es notwendig, einen zweiten Korb vorzusehen, der mindestens eine Elektrode umfasst, die entgegengesetzt geschaltet ist, das heißt bei zwei positiven Elektroden negativ ist und bei zwei positiven Elektroden negativ ist. Besonders bevorzugt ist es jedoch, dass bei den als doppelwandige Elektroden ausgeführten Körben eine Elektrode der doppelwandigen Elektrode negativ und die andere Elektrode positiv geschaltet ist. Die Trennmembran, die zwischen den Elektroden aufgenommen ist, kann dabei aus jedem beliebigen, dem Fachmann bekannten Material gefertigt sein, das elektrisch isolierend ist oder als Festelektrolyt wirkt. Wenn die Membran als Festelektrolyt wirkt, ist es besonders bevorzugt, wenn die Membran ionenleitend ist, um Ionen aus der Flüssigkeit aus dem im Reaktionsbehälter von einer Elektrode durch die Membran zur anderen Elektrode zu transportieren und so die chemische Reaktion an der Elektrode zu unterstützen.

Die Elektroden können auf unterschiedliche Weise im Reaktionsbehälter positioniert werden.

In einer Ausführungsform sind die Elektroden senkrecht zu einer zentralen Achse durch den Reaktor angeordnet oder umschließen die zentrale Achse des Reaktors radial. Hierbei sind die als Körbe ausgeformten Elektroden nicht mit der Rotorachse verbunden, so dass diese unbeweglich im Reaktorbehälter positioniert sind. Wenn die als Körbe ausgeformten Elektroden senkrecht zu einer zentralen Achse durch den Reaktor angeordnet sind, entspricht die Anordnung zum Beispiel der eines Berty-Reaktors. Um das Reaktionsmedium durch die als Körbe ausgeformten Elektroden zu transportieren, ist vorzugsweise oberhalb oder unterhalb des Korbs ein Rührer angeordnet. Hierbei handelt es sich besonders bevorzugt um einen axial fördernden Rührer. Auf diese Weise wird das Reaktionsmedium durch den Korb, den die Elektroden bilden, gefördert und kommt in gleichmäßigen Kontakt mit den Elektroden. Ein weiterer Vorteil, der sich durch den Einsatz des Rührers ergibt, ist, dass insbesondere bei Reaktionen in der Flüssigphase an den Elektroden entstehende Gasblasen, die ansonsten durch Flächenbelegung auf den Elektroden den Umsatz reduzieren würden und die in der Regel ein gasförmiges Reaktionsprodukt enthalten, aufgrund der durch den Rührer induzierten Strömung von den Elektroden abgetragen werden und im Behälter in Richtung einer Gasphase oberhalb der Flüssigphase aufsteigen können.

Wenn die als Korb ausgeformte Elektrode die zentrale Achse des Reaktors radial umschließt, hat der Korb vorzugsweise eine zylindrische Form und die Zylinderwandung wird aus den Elektroden gebildet. Besonders bevorzugt bilden dabei die positive Elektrode und die negative Elektrode zwei konzentrische Zylinderhülsen, die miteinander verbunden sind. Der Aufbau kann dabei zum Beispiel dem eines Robinson-Mahoney-Reaktors entsprechen. Der Rührer wird vorzugsweise innerhalb des durch die Elektroden ausgeformten Korbs angeordnet. Alternativ ist es auch möglich, einen Rührer oberhalb und einen unterhalb des Korbs anzuordnen. Wenn nur ein Rührer verwendet wird, so wird vorzugsweise ein axial fördernder Rührer eingesetzt, um das Reaktionsmedium durch den Korb zu transportieren. Wenn zwei Rührer eingesetzt werden, so werden diese vorzugsweise so angeordnet, dass eine Radialströmung entsteht, so dass das flüssige Reaktionsmedium durch den von den Elektroden ausgeformten Korb strömt.

Vorteil der die zentrale Achse des Reaktors radial umschließenden Elektroden ist, dass ein homogeneres Strömungsprofil erzeugt wird und damit auch eine entsprechend homogenere Verweilzeit pro Flächeneinheit. Hierdurch wird das Upscaling auf Pilotanlagen oder Großanlagen für die industrielle Produktion erleichtert. Ein weiterer Vorteil ist, dass die sich einstellende laminare Grenzschicht auf der Oberfläche der Elektroden eine konstante Dicke aufweist und damit konstante Stoffübergangszahlen. Dies ist besonders wichtig bei Dünnschichtelektroden.

Im Unterschied zu den die zentrale Achse des Reaktors radial umschließenden Elektroden ist das Strömungsprofil durch Elektroden senkrecht zur zentralen Achse des Reaktors in der Regel nichtlinear. Aus diesem Grund werden Elektroden bevorzugt, die die zentrale Achse des Reaktors radial umschließen.

Neben dem Einsatz von statischen und damit unbewegten Elektroden, ist es alternativ auch möglich, dynamische Elektroden einzusetzen. In diesem Fall sind die als Körbe ausgeformten Elektroden insbesondere mit der Rührerachse verbunden. Hierdurch rotieren die als Körbe ausgeformten Elektroden im Reaktorbehälter, wobei durch die Rotation der als Körbe ausgeformten Elektroden auch eine Strömung im Reaktionsmedium erzeugt wird, so dass die mit der Rührerachse verbundenen Elektroden gleichzeitig als Rührerblätter wirken. Die als Körbe ausgebildeten Elektroden können in jedem beliebigen Winkel zur Rührerachse angeordnet sein, wobei eine Ausführung wie beispielsweise in einem Carberry-Reaktor, bei der die mit der Rührerachse verbundenen Elektroden parallel zur Rührerachse angeordnet sind, bevorzugt ist.

Alternativ zu einer Anordnung der als Körbe ausgeformten Elektroden derart, dass die einzelnen Körbe parallel zur Rührerachse angeordnet sind, ist es auch möglich, die als Körbe ausgeformten Elektroden senkrecht zur Rührerachse anzuordnen. Für einen guten Kontakt des Reaktionsmediums mit den Elektroden ist es in diesem Fall weiter bevorzugt, wenn zwischen den senkrecht zur Rührerachse angeordneten Elektroden Rührerblätter eines Radialrotors angeordnet sind. Durch die Rührerblätter des Radialrotors wird das Medium radial nach außen transportiert und so mit der Oberfläche der senkrecht zur Rotorachse angeordneten Elektroden in Kontakt gebracht.

Anders als bei statischen Elektroden, die sich insbesondere dann eignen, wenn das Upscaling im Vordergrund steht, eignen sich dynamische Elektroden, wenn die intrinsische Kinetik ohne Stofftransportlimitierungen untersucht werden soll.

Neben den vorstehend beschriebenen Anordnungen mit statischen oder dynamischen Elektroden ist es weiterhin auch möglich, eine Elektrode statisch und eine Elektrode dynamisch zu betreiben. Eine solche Anordnung führt zu einem Rotor/Stator Prinzip, wie es für heterogen katalysierte Reaktionen zum Beispiel in einem Caldwell-Reaktor umgesetzt wird. Hierbei wird auf der rotierenden Elektrode die wandnahe Schicht des Elektrolyten besonders schnell gewechselt, um Konzentrationsgradienten zu verringern. Elektrolyt, der in der Nähe der Achse aufgegeben wird, fließt abhängig von der Drehzahl mehr oder weniger schnell nach außen. Der dabei entstehende Flüssigkeitsfilm hat eine sich dadurch einstellende genau definierte Filmdicke. Hierzu ist es zum Beispiel möglich, die Rührerachse, auf der die dynamischen Elektroden befestigt sind, hohl zu gestalten, so dass der Elektrolyt durch die hohle Rührerachse durch eine Öffnung auf die scheibenförmige Elektrode strömt. Hierzu wird der Elektrolyt vorzugsweise aus dem unteren Bereich des Reaktionsbehälters, in dem sich dieser sammelt, nachdem er von der sich drehenden Elektrode geschleudert wurde, in die hohle Rührerachse angesaugt wird. Wenn übereinander abwechselnd mehrere stationäre und dynamische Elektroden angeordnet werden, kann die benetzte Fläche entsprechend vergrößert werden. Durch eine Strukturierung der Oberfläche, die die Strömung des Elektrolyten beeinflusst, zum Beispiel indem der durch die Rotation aufgezwungenen radialen Strömung eine axiale Strömung überlagert wird, der Stoffaustausch intensiviert und aufgrund der längeren Verweilzeit auf der Elektrode vergrößert werden.

Bei elektrokatalysierten Reaktionen ist es notwendig, dass entweder ein flüssiger Elektrolyt im Reaktionsmedium enthalten ist oder alternativ ein Festelektrolyt zwischen der positiven Elektrode und der negativen Elektrode angeordnet ist und beide Elektroden kontaktiert. Über den flüssigen Elektrolyten oder den Festelektrolyten wird der Ionen-Strom von der negativen Elektrode zur positiven Elektrode geleitet. Wenn ein flüssiger Elektrolyt im Reaktionsmedium enthalten ist, so kann dieser entweder ein Edukt oder Produkt der zu untersuchenden chemischen Reaktion sein oder gegenüber den an der Reaktion beteiligten Komponenten inert. Bei Einsatz eines Festelektrolyten ist das Reaktionsgemisch unabhängig vom Elektrolyten wählbar.

Wenn ein flüssiger Elektrolyt eingesetzt wird, kann eine der beiden Elektroden oder können alternativ auch beide Elektroden als Gasdiffusionselektroden ausgeführt sein. Dabei wird ein Reaktionsgas durch eine poröse Schicht durch die die Elektrode durchgeleitet, um entweder an der Elektrode oder im flüssigen Elektrolyten zu reagieren. Alternativ können auch Produktgase an einer der beiden Elektroden durch eine solche Gasdiffusionsschicht ausgeleitet werden.

Die eingesetzten Elektroden umfassen in der Regel einen Stromkollektor aus einem Metall oder aus Graphit, ein Substrat als Träger für den Elektrokatalysator und, sofern ein solches eingesetzt wird, das katalytisch aktive Material sowie ein Kontaktmaterial zwischen dem Katalysator und der stromführenden Schicht. Geeignete Metalle für den Stromkollektor sind zum Beispiel Kupfer, Aluminium, Titan oder Edelstahl. Als Substrat eignen sich insbesondere metallische Gewebe oder Kohlenstoffgewebe, wobei hier die gleichen Metalle geeignet sind wie für den Stromkollektor. Als Kontaktmaterial zwischen dem Katalysator und der stromführenden Schicht können zum Beispiel Kohlenstoff, beispielsweise Graphit, oder leitfähige Polymere eingesetzt werden.

Der eingesetzte Elektrolyt sorgt für die ionische Leitfähigkeit. Wenn Festelektrolyte eingesetzt werden, können diese zum Beispiel anionische oder kationische Polymermembrane, beispielsweise Nafion^{®}, oder ionisch leitfähige Keramiken, beispielsweise yttriumstabilisiertes Zirkoniumoxid sein.

Als flüssige Elektrolyte, die nicht an der Reaktion beteiligt sind, eignen sich unter anderem Metallsalzlösungen, Salzschmelzen oder ionische Flüssigkeiten. Da bei Einsatz eines flüssigen Elektrolyten die chemische Reaktion im Elektrolyten stattfindet, sollte dieser einen hohen Dampfdruck bei erhöhten Temperaturen aufweisen und für eine gute Wärmeableitung der Reaktionswärme sorgen. Zudem ist auch vorteilhaft, wenn der Elektrolyt eine niedrige Viskosität aufweist.

Wenn ein flüssiger Elektrolyt eingesetzt wird und dieser nicht Teil des Reaktionsgemischs ist, sondern gegenüber der chemischen Reaktion inert, ist es weiterhin in der Regel erforderlich, dass dieser aus dem Reaktionsgemisch abtrennbar ist. Abhängig vom eingesetzten Elektrolyten kann dies zum Beispiel durch eine Phasenänderung erfolgen, indem beispielsweise ein Lösungsmittel zugegeben wird oder durch Änderung der Prozesszustände, die die Löslichkeit der an der Reaktion beteiligten Komponenten im Elektrolyten verändern, zum Beispiel eine Änderung der Temperatur oder des Drucks. Sofern ein Elektrolyt verwendet wird, der nicht im Reaktionsgemisch löslich ist, so dass sich eine Emulsion aus Reaktionsgemisch und Elektrolyt bildet, ist es auch möglich, dem Reaktionsbehälter einen Phasenscheider nachzuschalten, in dem der Elektrolyt aus dem Reaktionsgemisch abgetrennt wird. Wenn der Elektrolyt nicht im Reaktionsgemisch löslich ist, ist dieser vorzugsweise die kontinuierliche Phase der Emulsion, damit so der Ionentransport beziehungsweise der externe Stromfluss sichergestellt werden kann.

Wenn die als Körbe ausgeformten Elektroden mit einem Feststoff, beispielsweise einem katalytisch aktiven Material oder einem Turbulenzpromoter, befüllt sind, ist es auch möglich, dass der Feststoff gleichzeitig elektrisch oder ionisch leitend ist und im ersteren Fall als Elektrokatalysator wirkt und im letzteren Fall als Festelektrolyt wirkt. In diesem Fall wird das elektrische Potential durch elektrische oder ionische Leitung von Partikel zu Partikel im Feststoff übertragen. Wenn die Partikel nicht so dicht gepackt sind, dass diese immobil im Korb aufgenommen sind, sondern sich eine Partikelbewegung im Korb einstellen kann, kann auch ein Ladungstransfer von Partikel zu Partikel erfolgen. In jedem Fall können zwei Orientierungsrichtungen unterschieden werden. So können das Potential und die Strömungsrichtung der Medien parallel verlaufen oder senkrecht zueinander stehen. Die erreichbaren Grenzstromdichten beim Verfüllen des Elektrodenzwischenraums lassen sich auf diese Weise um bis zu Faktor 100 erhöhen.

Wenn mehrphasige Reaktionen durchgeführt werden sollen, insbesondere solche bei denen mindestens ein Edukt und/oder das Produkt gasförmig ist und mindestens eine Komponente, zum Beispiel ein Edukt, der Elektrolyt oder das Produkt flüssig ist, werden vorzugsweise Gasdiffusionselektroden eingesetzt. Hierzu weisen die porösen Elektroden ein internes Verteilsystem zur Einleitung oder Ausleitung von Gasen in die Elektrode auf. Besonders bevorzugt ist es, wenn die Gasdiffusionselektroden an der Phasengrenze zwischen einem Gasraum im Reaktorkopf und der Flüssigkeit im Reaktorbehälter positioniert werden. Alternativ ist es jedoch auch möglich, dass die Gasdiffusionselektroden eine eigene Gaszufuhr aufweisen und vollständig in der Flüssigkeit eingetaucht sind.

Die als Körbe ausgeformten Elektroden können als Potential zur Verringerung der Aktivierungsenergie genutzt werden oder alternativ auch selbst mit einem katalytisch aktiven Material beschichtet sein oder aus einem katalytisch aktiven, elektrisch leitenden Material gefertigt sein. Mit einem katalytisch aktiven Material beschichtete Elektroden oder aus einem katalytisch aktiven Material gefertigte Elektroden werden im Folgenden auch als "katalytisch aktive Elektrode" bezeichnet. Nicht katalytisch aktive Elektroden oder Körbe, die nicht mit einem katalytisch aktiven Material befüllt sind, können insbesondere in homogen katalysierten Reaktionen eingesetzt werden.

Das katalytisch aktive Material zur Beschichtung der Elektroden oder das Material aus dem die katalytisch aktive Elektrode gefertigt ist oder das in den Korb eingebrachte katalytisch aktive Material kann jedes, dem Fachmann bekannte katalytisch aktive Material sein, das für die zu untersuchenden Reaktionen genutzt werden kann. Durch die Auswechselbarkeit der als Körbe gefertigten Elektroden können mit der erfindungsgemäßen Vorrichtung auf einfache Weise auch unterschiedliche katalytisch aktive Materialien untersucht werden, indem jeweils die als Körbe ausgeführten Elektroden ausgetauscht werden.

Reaktionen, die mit der erfindungsgemäßen Vorrichtung untersucht werden können, sind zum Beispiel Flüssigphasenreaktionen, Gasphasenreaktionen oder Reaktionen in der überkritischen Phase. Die Reaktionen können dabei Reaktionen im unteren Temperaturbereich sein, das heißt Reaktionen, die bei Temperaturen im Bereich von -40 bis 150°C durchgeführt werden, oder auch Hochtemperaturreaktionen, das heißt Reaktionen, die bei Temperaturen im Bereich von 150 bis 650°C durchgeführt werden. Reaktionen im unteren Temperaturbereich werden dabei insbesondere in der Flüssigphase durchgeführt. Hochtemperaturreaktionen sind insbesondere Gasreaktionen, Reaktionen, die in überkritischen Medien durchgeführt werden oder die beispielsweise Salzschmelzen als Elektrolyt verwenden. Geeignete Salzschmelzen sind zum Beispiel Carbonatschmelzen wie sie in Schmelzcarbonatbrennstoffzellen eingesetzt werden. Alternativ können für Hochtemperaturreaktionen auch keramische Festelektrolyten eingesetzt werden.

Insbesondere für die Untersuchung von Hochtemperaturreaktionen ist es notwendig, dass alle eingesetzten Materialien für die Vorrichtung gegenüber den Temperaturen, bei denen die Reaktion durchgeführt wird, stabil sind.

Der Behälter mit einem Rührer, der für die erfindungsgemäße Vorrichtung eingesetzt wird, kann zum Beispiel ein Batchreaktor, ein Semi-Batch-Reaktor oder ein kontinuierlicher Rührkesselreaktor sein.

Um zu verhindern, dass ein unkontrolliertes elektrisches Feld entsteht und Gefährdungen des Bedienpersonals auszuschließen, ist der Reaktorbehälter innen mit einer elektrisch isolierenden Beschichtung ausgekleidet oder aus einem elektrisch isolierenden Material gefertigt. Hierdurch wird verhindert, dass der Behälter selbst elektrischen Strom überträgt. Zudem wird auf diese Weise sichergestellt, dass sich das elektrische Feld im Reaktor zwischen der positiven Elektrode und der negativen Elektrode, die in den Reaktorbehälter eingebracht sind, ausbildet.

Als Material für die elektrisch isolierende Beschichtung eignen sich zum Beispiel Polymere wie Polytetrafluorethylen, Polyamide oder Polyolefine, sofern die Vorrichtung für Reaktionen eingesetzt wird, die unterhalb der Schmelztemperatur bei thermoplastischen Polymeren oder der Zersetzungstemperatur bei duroplastischen Polymeren durchgeführt wird. Insbesondere für die Untersuchung von Hochtemperaturreaktionen ist es bevorzugt, die elektrisch isolierende Beschichtung aus Keramik oder Glas zu fertigen.

Insbesondere Glas eignet sich alternativ auch als elektrisch isolierendes Material zur Fertigung des Behälters.

Wenn Reaktionen untersucht werden sollen, die bei einem Überdruck durchgeführt werden, ist es weiterhin erforderlich, den Reaktorbehälter aus einem druckfesten Material zu fertigen. Geeignete Materialien zur Fertigung des Reaktors sind zum Beispiel Metalle wie Edelstahl, NickelBasis-Legierungen, Titan oder Faserverbundwerkstoffe. Wenn das Material, aus dem der Reaktor gefertigt ist, elektrisch leitfähig ist, insbesondere ein Metall oder ein kohlenstofffaserverstärkter Kunststoff, ist es notwendig, diesen von innen mit einer elektrisch isolierenden Beschichtung zu versehen.

Neben dem Inneren des Reaktorbehälters wird aus Gründen der Sicherheit für den Betreiber auch die Rührerachse mit einer elektrisch isolierenden Beschichtung versehen oder aus einem elektrisch isolierenden Material gefertigt. Bei entsprechender Ausführung (z.B. Keramiklager statt Stahlkugellager) eignet sich aber auch ein herkömmlicher Magnetrührantrieb, da er das Antriebsdrehmoment kontaktlos überträgt. Für ein definiertes elektrisches Feld zwischen der negativen Elektrode und der positiven Elektrode ist bei stationären Elektroden, insbesondere wenn diese senkrecht zu einer zentralen Achse durch den Reaktor angeordnet sind oder die zentrale Achse des Reaktors radial umschließen, ist es weiterhin bevorzugt, wenn der Rührer Rührerblätter aufweist, die aus einem elektrisch nicht leitenden Material gefertigt sind oder mit einem elektrisch nicht leitenden Material beschichtet sind.

Als Material zur Herstellung der Rührerachse und der Rührerblätter, sofern diese aus einem elektrisch nicht leitenden Material gefertigt sind, oder als Material zur Beschichtung der Rührerachse und der Rührerblätter eignen sich dabei im Wesentlichen die gleichen Materialien, die auch zur Beschichtung oder Fertigung des Reaktorbehälters eingesetzt werden können. Lediglich die Verwendung von Glas als Material für die Rührerachse ist nicht bevorzugt.

Der Reaktionsbehälter kann einen Deckel aufweisen oder auch ohne Deckel betrieben werden. Wenn bei der Reaktion Gase entstehen oder Gase als Edukte eingesetzt werden, ist es jedoch bevorzugt, auch dann einen Deckel vorzusehen, wenn die Reaktion unter Umgebungsdruck durchgeführt wird. Sofern Reaktionen untersucht werden sollen, die bei Unterdruck oder Überdruck (jeweils bezogen auf Atmosphärendruck) durchgeführt werden, ist es jedoch notwendig, den Reaktionsbehälter mit einem Deckel zu verschließen, um den gewünschten Druck erzeugen zu können. Besonders bevorzugt ist es jedoch, unabhängig vom Druck, bei dem die zu untersuchenden Reaktionen durchgeführt werden, den Reaktionsbehälter mit einem Deckel zu verschließen.

Die Verwendung eines Deckels hat den Vorteil, dass zum Beispiel Halterungen für die als Korb ausgeführten Elektroden am Deckel angebracht werden können, so dass die als Korb ausgeführten Elektroden auf einfache Weise ausgetauscht werden können, wenn der Deckel geöffnet wird. Wenn die als Korb ausgeführten Elektroden an Halterungen am Deckel befestigt werden, sind diese weiterhin mit elektrischen Anschlüssen für die Elektroden versehen. Diese werden durch den Deckel ins Innere des Reaktionsbehälters geführt, so dass die Elektroden mit den Anschlüssen verbunden werden können.

Wenn kein Deckel vorgesehen ist, ist es bevorzugt, Halterungen am Reaktionsbehälter vorzusehen, an denen die Elektroden befestigt werden können.

Durch den Einsatz von Halterungen ist ein schneller und leichter Tausch der Elektroden möglich. Besonders bevorzugt ist es, wenn die Halterungen Schnellkupplungen aufweisen, an denen die Elektroden befestigt werden.

Um einen leichten und schnellen Austausch der Elektroden zu ermöglichen und zu verhindern, dass die elektrische Kontaktierung der Elektroden vergessen wird, ist es weiterhin vorteilhaft, wenn auch die elektrische Kontaktierung über die Halterungen erfolgt. Hierzu ist es zum Beispiel möglich, einen elektrischen Leiter in mindestens einer Halterung vorzusehen und die Halterung so zu gestalten, dass der in der Halterung aufgenommene elektrische Leiter mit der in der Halterung befestigten Elektrode kontaktiert wird. Um zu verhindern, dass Bedienpersonal bei Berührung der Halterung einen elektrischen Schlag bekommt oder ein Kurzschluss bei versehentlicher Berührung der Halterung entsteht, ist es weiterhin bevorzugt, wenn der elektrische Leiter innerhalb der Halterung verläuft und elektrisch isoliert ist.

Neben der Kontaktierung der Elektroden über die Halterung ist es alternativ auch möglich, die Elektroden mit elektrischen Kontakten zu versehen, die durch die Behälterwandung oder durch den Deckel nach außen geführt werden. In diesem Fall ist es erforderlich, die Durchführungen für die elektrischen Kontakte elektrisch isoliert zu gestalten, indem zum Beispiel eine Hülse aus einem elektrisch isolierenden Material in eine Öffnung eingebracht wird, durch die der elektrische Kontakt geführt wird.

Da insbesondere bei einem zentral angeordneten Rührer eine Ringströmung im Behälter entstehen kann und dadurch die Durchmischung der Komponenten im Reaktionsgemisch verschlechtert wird oder sogar nahezu vollständig unterbleibt, ist es bevorzugt, im Reaktorbehälter Strombrecher anzuordnen. Durch die Strombrecher wird die Strömung der Flüssigkeit gestört, so dass Turbulenzen entstehen, durch die die Durchmischung der einzelnen Komponenten im Reaktionsgemisch verbessert wird.

Wenn Strombrecher vorgesehen sind, so ist es möglich, diese elektrisch isolierend auszuführen. Alternativ ist es jedoch auch möglich, wenn stationäre Elektroden vorgesehen sind, die Strombrecher als Elektroden zu gestalten. In diesem Fall werden als Körbe ausgeformte Elektroden als Strombrecher im Behälter eingesetzt. Um die Strömung hinreichend zu stören werden die Körbe vorzugsweise mit Turbulenzpromotoren, insbesondere mit Füllkörpern gefüllt. Die Turbulenzpromotoren können dabei auch ein katalytisch aktives Material enthalten, was insbesondere dann bevorzugt ist, wenn die zu untersuchenden Reaktionen ergänzend heterogen katalysiert ablaufen.

Reaktionen, die mit der erfindungsgemäßen Vorrichtung untersucht werden können, sind zum Beispiel die Umsetzung von Kohlenstoffdioxid im überkritischen Zustand zu energiezwischenspeichernden Produkten wie Oxalsäure, Ameisensäure oder Formaldehyd. Neben diesen Reaktionen kann die erfindungsgemäße Vorrichtung jedoch auch zur Untersuchung beliebiger anderer Reaktionen eingesetzt werden, die elektrokatalytisch aktiviert oder unterstützt werden können.

Um die in der Vorrichtung ablaufende Reaktion auch optisch untersuchen zu können, ist es möglich, den Reaktorbehälter mit mindestens einem Sichtfenster auszustatten. Weiterhin kann eine Temperiereinheit vorgesehen sein, um die Vorrichtung zur Untersuchung von Reaktionen zu heizen oder zu kühlen. Insbesondere bei der Untersuchung von exothermen Reaktionen kann es notwendig sein, die bei der Reaktion entstehende Reaktionswärme abzuführen. Entsprechend ist es bei der Untersuchung von endothermen Reaktionen in der Regel erforderlich, Wärme zuzuführen. Unabhängig davon, ob eine exotherme Reaktion oder eine endotherme Reaktion untersucht wird, kann es weiterhin erforderlich sein, zumindest zu Beginn Wärme zuzuführen, um die Reaktion zu starten. Die Temperiereinheit kann dabei jede beliebige, dem Fachmann bekannte Temperiereinheit sein. So ist es zum Beispiel möglich, im Reaktor Rohrleitungen vorzusehen, die von einem Temperiermedium, beispielsweise Kühlwasser oder Heizdampf oder auch einem flüssigen Temperiermedium wie einem Thermalöl, durchströmt werden.

Neben Rohrleitungen im Reaktor ist es auch möglich, Rohrleitungen außen auf dem Reaktor aufzubringen oder einen Doppelmantel vorzusehen, der vom Temperiermedium durchströmt wird.

Insbesondere wenn es notwendig ist, große Wärmemengen zuzuführen oder wenn Hochtemperaturreaktionen untersucht werden sollen, ist es vorteilhaft, eine elektrische Beheizung vorzusehen oder Wärme durch Verbrennung eines Brennstoffs zuzuführen. In diesem Fall befindet sich die Beheizung vorzugsweise außerhalb des Reaktionsbehälters, so dass die Wärme über die Wandung des Reaktionsbehälters zugeführt wird.

Ausführungsformen der Erfindung sind in den Figuren dargestellt und werden in der nachfolgenden Beschreibung näher erläutert.

Es zeigen:
- Figur 1: eine schematische Darstellung einer erfindungsgemäßen Vorrichtung mit senkrecht zur zentralen Achse des Reaktionsbehälters ausgerichteten Elektroden in einer ersten Ausführungsform,
- Figur 2: eine schematische Darstellung einer erfindungsgemäßen Vorrichtung mit radial zur zentralen Achse des Reaktionsbehälters ausgerichteten Elektroden in einer ersten Ausführungsform,
- Figur 3: eine schematische Darstellung einer erfindungsgemäßen Vorrichtung mit als Rührerblätter ausgeführten Elektroden in einer ersten Ausführungsform,
- Figur 4: eine schematische Darstellung mit senkrecht zu einer Rührerachse ausgerichteten Elektroden wobei eine Elektrode mit der Rührerachse verbunden ist, in einer ersten Ausführungsform,
- Figur 5: eine schematische Darstellung einer erfindungsgemäßen Vorrichtung mit senkrecht zur zentralen Achse des Reaktionsbehälters ausgerichteten Elektroden in einer zweiten Ausführungsform,
- Figur 6: eine schematische Darstellung einer erfindungsgemäßen Vorrichtung mit radial zur zentralen Achse des Reaktionsbehälters ausgerichteten Elektroden in einer zweiten Ausführungsform,
- Figur 7: eine schematische Darstellung einer erfindungsgemäßen Vorrichtung mit als Rührerblätter ausgeführten Elektroden in einer zweiten Ausführungsform,
- Figur 8: eine schematische Darstellung mit senkrecht zu einer Rührerachse ausgerichteten Elektroden wobei eine Elektrode mit der Rührerachse verbunden ist, in einer zweiten Ausführungsform,
- Figur 9: eine schematische Darstellung einer als Rührkessel ausgebildeten Vorrichtung zur Untersuchung von Reaktionen,
- Figur 10: eine schematische Darstellung einer als Rührkessel ausgebildeten Vorrichtung zur Untersuchung von Reaktionen in einer zweiten Ausführungsform,
- Figur 11: eine schematische Darstellung einer als Rührkessel ausgebildeten Vorrichtung zur Untersuchung von Reaktionen mit einer Anode, einer Kathode sowie einer Referenzelektrode,
- Figur 12: eine schematische Darstellung einer als Rührkessel ausgebildeten Vorrichtung zur Untersuchung von Reaktionen mit einem Sichtfenster.

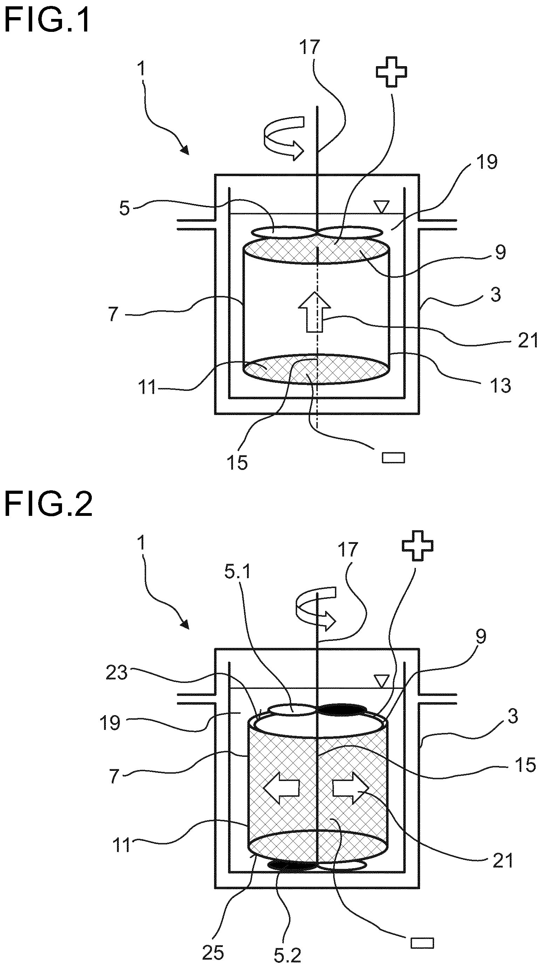

Figur 1 zeigt eine schematische Darstellung einer erfindungsgemäßen Vorrichtung mit senkrecht zur zentralen Achse des Reaktionsbehälters ausgerichteten Elektroden in einer ersten Ausführungsform.

Eine Vorrichtung 1 zur Untersuchung elektrokatalytischer Reaktionen umfasst einen Behälter 3 mit einem Rührer 5. Im Behälter 3 sind als Korb 7 ausgeformte Elektroden 9, 11 aufgenommen. Hierzu sind eine positive Elektrode 9 und eine negative Elektrode 11 über nicht elektrisch leitende Elemente 13 miteinander zu dem Korb 7 verbunden. Die Elektroden 9, 11 sind in der in Figur 1 dargestellten Ausführungsform senkrecht zu einer zentralen Achse 15 des Behälters 3 ausgerichtet. Da hier der Rührer 5 ebenfalls zentral im Behälter 3 positioniert ist, bildet die Rührerachse 17 einen Teil der zentralen Achse 15. Um einen gleichmäßigen Kontakt eines im Reaktor enthaltenen flüssigen Reaktionsgemischs 19 mit mindestens einer der Elektroden 9, 11 zu erhalten, sind die Elektroden 9, 11 vorzugsweise so gefertigt, dass die Flüssigkeit durch die Elektroden 9, 11 strömen kann. Hierbei wird die Strömung im Reaktionsgemisch 19 durch Rotation des Rührers 5 erzeugt. Vorzugsweise wird ein Rührer eingesetzt, der eine Axialströmung erzeugt, wobei diese entweder, wie hier mit Pfeil 21 gezeigt, von unten nach oben gerichtet sein kann oder entgegengesetzt von oben nach unten. In welche Richtung die Strömung erzeugt wird, ist dabei abhängig von der Art und Ausrichtung sowie der Drehrichtung des Rührers. Als Rührer eignet sich dabei jeder axialfördernde Rührer, zum Beispiel Schrägblattrührer oder Propellerrührer.

Die nicht elektrisch leitenden Elemente 13, die die negative Elektrode 11 und die positive Elektrode 9 miteinander verbinden können beispielsweise Stäbe sein. Alternativ ist es auch möglich, eine Zylinderhülse zu verwenden, um die Elektroden 9, 11 miteinander zum Korb zu verbinden. Wenn eine Zylinderhülse verwendet wird, kann diese für das Reaktionsmedium durchlässig sein, zum Beispiel in Form eines Drahtgeflechts oder als Hülse mit darin ausgebildeten Öffnungen. Alternativ ist es auch möglich, eine Zylinderhülse zur Verbindung der Elektroden 9, 11 zu nutzen, die nicht für das Reaktionsmedium durchlässig ist. In diesem Fall wird durch den Rührer eine Schlaufenströmung erzeugt, durch die das Reaktionsmedium durch das Innere des Korbs strömt, um die Kante der Zylinderhülse und von außen um die Zylinderhülse geführt wird. Hierbei strömt das Reaktionsmedium dann auch durch die Elektroden, die die Stirnflächen des als Zylinder gestalteten Korbs bilden.

Wenn zusätzlich ein heterogener Feststoffkatalysator eingesetzt werden soll, so wird dieser vorzugsweise in den Korb eingebracht. Hierzu wird die Zylinderhülse entweder massiv oder alternativ in Form eines Geflechts oder Gewebes gestaltet, wobei die Öffnungen im Geflecht oder Gewebe kleiner sein müssen als die Katalysatorpartikel, damit diese nicht aus dem Korb herausgespült werden können.

Alternativ zu einem Gewebe oder Geflecht ist es auch möglich, die Elektroden 9, 11 mit Stäben zu verbinden, wobei auch hier der Abstand so gewählt sein muss, dass keine Katalysatorpartikel aus dem Korb herausgespült werden können.

Neben der Verwendung von Katalysatorpartikeln, beispielsweise ein das katalytisch aktive Material enthaltendes Granulat oder das katalytisch aktive Material enthaltende Füllkörper, ist es auch möglich, eine strukturierte Packung, die das katalytisch aktive Material enthält, vorzusehen. In diesem Fall können die Elektroden 9, 11 an der Oberseite und der Unterseite mit der strukturierten Packung verbunden sein, so dass der Korb aus den Elektroden und der strukturierten Packung gebildet wird.

Auch wenn die Reaktion homogen katalysiert wird oder keinen weiteren Katalysator erfordert, ist es möglich, den von den Elektroden ausgeformten Korb mit einem partikulären Material, beispielsweise einem Granulat oder Füllkörpern zu füllen oder eine strukturierte Packung vorzusehen, die zwischen den Elektroden 9, 11 positioniert ist. In diesem Fall unterstützt das partikuläre Material oder die strukturierte Packung die Durchmischung der Komponenten des Reaktionsgemischs.

Neben dem großen Abstand zwischen den Elektroden, wie er in Figur 1 dargestellt ist, können die positive Elektrode 9 und die negative Elektrode 11 auch sehr viel näher zueinander positioniert werden. Es ist lediglich darauf zu achten, dass sich die positive Elektrode 9 und die negative Elektrode 11 nicht berühren. Bei einem sehr geringen Abstand kann hierzu zum Beispiel ein Festelektrolyt zwischen den Elektroden aufgenommen sein. Der Festelektrolyt kann beispielsweise auch in Form einer Membran ausgeführt sein. Wenn bei einem geringen Abstand zwischen der positiven Elektrode 9 und der negativen Elektrode 11 kein Festelektrolyt oder auch keine Trennmembran aufgenommen sein soll, kann auch mit Hilfe von Abstandshaltern, beispielsweise kurzen Stäben oder Scheiben aus einem elektrisch isolierenden Material sichergestellt werden, dass sich die Elektroden auch im Betrieb der Vorrichtung aufgrund von Verformungen durch die aufgebrachte Strömung nicht berühren.

In Figur 2 ist eine schematische Darstellung einer erfindungsgemäßen Vorrichtung mit radial zur zentralen Achse des Reaktionsbehälters ausgerichteten Elektroden in einer ersten Ausführungsform dargestellt.

Im Unterschied zu der in Figur 1 dargestellten Ausführungsform sind bei der in Figur 2 dargestellten Ausführungsform die Elektroden 9, 11 radial um die zentrale Achse 15 des Behälters 3 angeordnet. Um die Elektroden 9, 11 gleichmäßig zu durchströmen, liegt auch die Rührerachse 17 auf der zentralen Achse 15 des Behälters 3.

Der durch die positive Elektrode 9 und die negative Elektrode 11 gebildete Korb hat hier die Form einer Zylinderhülse, wobei die Dicke der Zylinderhülse dem Abstand zwischen den Elektroden 9, 11 plus der Dicke der Elektroden 9, 11 entspricht.

Der Abstand zwischen der positiven Elektrode 9 und der negativen Elektrode 11 kann dabei wie vorstehend für die senkrecht zur zentralen Achse 15 angeordneten Elektroden 9, 11 beschrieben, zum Beispiel durch Einbringen eines Festelektrolyten oder einer Trennmembran oder auch durch geeignete Abstandshalter sichergestellt werden.

Alternativ dazu kann der Abstand zwischen der positiven Elektrode 9 und der negativen Elektrode 11 auch so groß gewählt werden, dass Partikel, beispielsweise ein Granulat oder Füllkörper oder auch eine strukturierte Packung zwischen die Elektroden eingebracht werden können. Die Partikel können dabei, wie vorstehen beschrieben, inert sein und nur zur Unterstützung der Durchmischung der Komponenten des Reaktionsgemischs dienen oder alternativ ein katalytisch aktives Material enthalten, wenn zusätzlich zum Anlegen des elektrischen Felds ein heterogener Katalysator eingesetzt werden soll.

Um die Elektroden 9, 11 gleichmäßig zu durchströmen, ist es notwendig, eine Radialströmung im Behälter 3 zu erzeugen. Diese ist mit den Pfeilen 21 schematisch dargestellt.

Zur Erzeugung der Radialströmung kann zum Beispiel ein radial fördernder Rührer, beispielsweise ein Scheibenrührer, eingesetzt werden. Alternativ ist es auch möglich, wie hier dargestellt, oberhalb der Oberkante 23 des Korbs 7 und unterhalb der Unterkante 25 des Korbs 7 jeweils einen axial fördernden Rührer 5.1, 5.2 einzusetzen, wobei die Förderrichtung der axial fördernden Rührer 5.1, 5.2 entgegengesetzt ist und jeder der Rührer 5.1, 5.2 eine Strömung in das Innere des Korbs 7 hinein erzeugt. Hierzu können die Rührer 5.1, 5.2 entweder in entgegengesetzte Richtung rotieren oder, bevorzugt, bei gleicher Drehrichtung und Montage auf einer gemeinsamen Rührerachse 17 entgegengesetzt ausgerichtete Rührerblätter aufweisen.

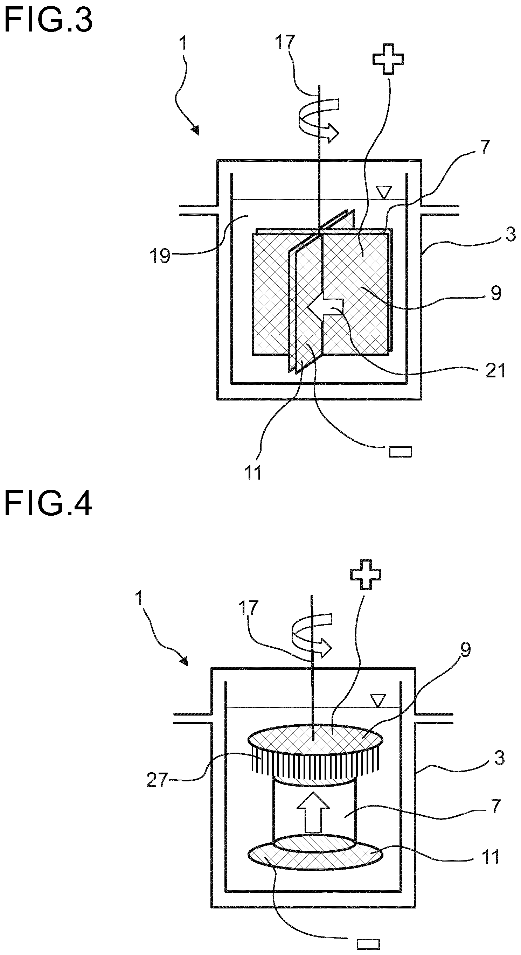

Figur 3 zeigt eine schematische Darstellung einer erfindungsgemäßen Vorrichtung mit als Rührerblätter ausgeführten Elektroden in einer ersten Ausführungsform.

Anders als bei den in den Figuren 1 und 2 dargestellten Ausführungsformen ist bei der in Figur 3 dargestellten Ausführungsform der Korb 7, der von den Elektroden 9, 11 gebildet wird, nicht stationär im Behälter 3 aufgenommen, sondern dynamisch.

Hierzu sind die den Korb 7 bildenden Elektroden 9, 11 mit der Rührerachse 17 verbunden, so dass die den Korb 7 bildenden Elektroden 9, 11 gleichzeitig als Rührerblätter wirken. Aufgrund der hierdargestellten Anordnung, bei der eine Kante der Körbe 7 parallel zur Rührerachse 17 verläuft, wird eine radiale Strömung erzeugt, wie mit dem Pfeil 21 schematisch dargestellt.

Um zu verhindern, dass sich eine stationäre Strömung einstellt, die genauso schnell rotiert wie die Elektroden 9, 11 ist es bevorzugt, wenn Strömungsbrecher im Behälter 3 positioniert werden. Hierdurch lässt sich sicherstellten, dass ein Flüssigkeitsaustausch auf den Oberflächen der Elektroden erfolgt und bevorzugt Reaktionsgemisch durch die von den Elektroden 9, 11 gebildeten Körbe 7 strömt.

Wie auch vorstehend zu den stationären Körben beschrieben, können auch hier Partikel wie ein Granulat oder Füllkörper oder auch eine strukturierte Packung in den Körben enthalten sein, wobei diese entweder zur Verbesserung der Durchmischung dienen oder ein katalytisch aktives Material enthalten.

Eine weitere Alternative für die Anordnung der Elektroden ist in Figur 4 dargestellt. Hier ist die positive Elektrode 9 mit der Rührerachse 17 verbunden, so dass diese während des Betriebs rotiert und die negative Elektrode 11 ist stationär im Behälter 3 aufgenommen. In diesem Fall umfasst der Korb 7 nur die stationäre, hier negative, Elektrode 11.

Um im Behälter 3 eine Strömung zu erzeugen, ist an der Rührerachse 17 ein Radialrotor 27 als Rührer angebracht. Durch den Radialrotor 27 wird eine Strömung erzeugt, durch die das flüssige Reaktionsgemisch 19 in den Korb 7 strömt und mit Hilfe des Radialrotors über die Oberfläche der rotierenden positiven Elektrode 9.

Besonders bevorzugt bei der in Figur 4 dargestellten Ausführungsform ist es, wenn die Rührerachse 17 hohl ist und Reaktionsgemisch in die Rührerachse 17 strömen kann, im Bereich der auf der Rührerachse 17 montierten Elektrode 9 Öffnungen in der Rührerachse 17 angeordnet sind, so dass das Reaktionsgemisch aus der Rührerachse 17 durch die Öffnungen über die Elektrode 9 geleitet wird. Durch das Ausströmen des Reaktionsgemischs aus der Rührerachse bildet sich am Ende der Rührerachse ein Unterdruck, so dass Reaktionsgemisch in die Rührerachse eingesaugt wird. Dies kann durch die durch den Radialrotor 27 erzeugte Strömung unterstützt werden.

Der Korb 7, der mit der stationären, negativen Elektrode 11 verbunden ist, kann auch hier mit Partikeln oder einer strukturierten Packung, die jeweils gegebenenfalls ein katalytisch aktives Material enthalten, gefüllt sein.

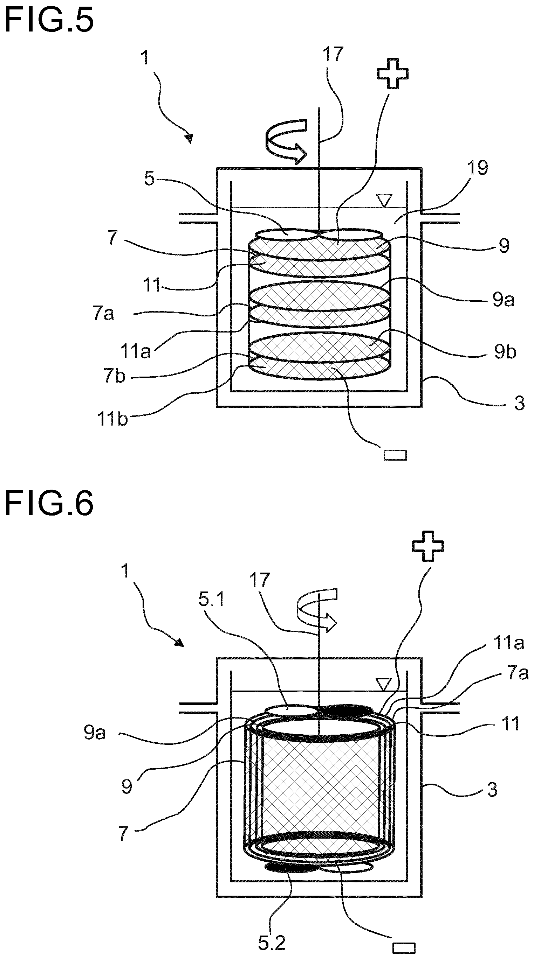

Die in den Figuren 5 bis 8 dargestellten Ausführungsformen unterscheiden sich von den in den Figuren 1 bis 4 dargestellten Ausführungsformen dadurch, dass nicht jeweils nur eine positive Elektrode 9 und eine negative Elektrode 11 vorgesehen ist, sondern jeweils eine Vielzahl an positiven und negativen Elektroden.

Figur 5 zeigt eine schematische Darstellung einer erfindungsgemäßen Vorrichtung mit senkrecht zur zentralen Achse des Reaktionsbehälters ausgerichteten Elektroden in einer zweiten Ausführungsform. Im Unterschied zu der in Figur 1 dargestellten Ausführungsform sind hier mehrere Körbe 7, 7a, 7b im Behälter 3 aufgenommen. Hierbei umfasst jeder Korb eine positive Elektrode 9, 9a, 9b und eine negative Elektrode 11, 11a, 11b. Hierbei sind die positiven Elektroden 9, 9a, 9b und die negativen Elektroden 11, 11a, 11b jeweils abwechselnd angeordnet.

Die einzelnen Körbe sind dabei vorzugsweise genauso aufgebaut wie vorsehend für Figur 1 beschrieben.

In Figur 6 ist eine schematische Darstellung einer erfindungsgemäßen Vorrichtung mit radial zur zentralen Achse des Reaktionsbehälters ausgerichteten Elektroden in einer zweiten Ausführungsform gezeigt.

Hier sind im Unterschied zur Ausführungsform, wie sie in Figur 2 dargestellt ist, eine Vielzahl von Elektroden konzentrisch um die zentrale Achse 15 des Behälters 3 angeordnet.

Wie auch in der Figur 5 gezeigten Ausführungsform wechseln sich jeweils eine positive Elektrode 9, 9a und eine negative Elektrode 11, 11a ab, wobei jeweils ein Korb 7, 7a von einer positiven Elektrode 9, 9a und einer negativen Elektrode 11, 11a gebildet wird.

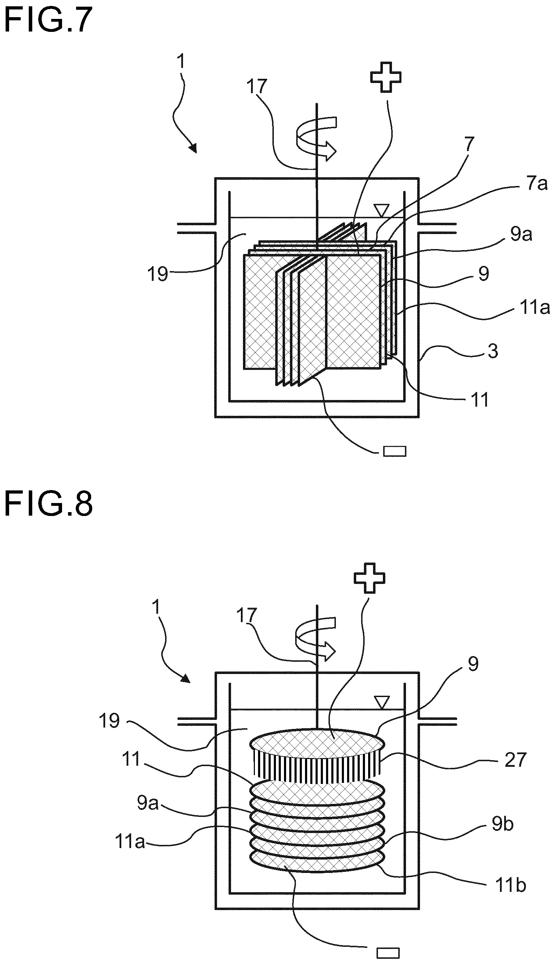

Figur 7 zeigt eine schematische Darstellung einer erfindungsgemäßen Vorrichtung mit als Rührerblätter ausgeführten Elektroden in einer zweiten Ausführungsform, die sich dadurch von der in Figur 3 dargestellten Ausführungsform unterscheidet, dass die Rührerblätter jeweils mehr als zwei Elektroden aufweisen.

Wenn die Elektroden jeweils Rührerblätter bilden und mehr als nur zwei Elektroden pro Rührerblatt vorgesehen sind, werden diese, wie vorstehend für die stationären Elektroden beschrieben, ebenfalls abwechselnd angeordnet, wobei jeweils eine positive Elektrode 9, 9a und eine negative Elektrode 11, 11a einen Korb 7, 7a bilden.

Die in Figur 8 dargestellte Ausführungsform unterscheidet sich von der in Figur 4 dargestellten ebenfalls dadurch, dass eine Vielzahl von Elektroden vorgesehen ist. Auch hier werden die Elektroden abwechselnd angeordnet, wobei alle positiven Elektroden 9, 9a, 9b mit der Rührerachse 17 verbunden sein können und alle negativen Elektroden 11, 11a, 11b stationär oder umgekehrt.

Alternativ ist es auch möglich, nur eine Elektrode mit der Rührerachse zu verbinden und alle anderen stationär in den Behälter 3 einzubringen, wobei die stationären Elektroden 9a, 9b, 11, 11a, 11b einen oder mehrere Körbe bilden können. Wenn die Elektroden mehrere Körbe bilden, ist auch hier bevorzugt, dass jeweils eine positive Elektrode 9a, 9b und eine negative Elektrode 11, 11a, 11b einen Korb bilden.

Bei nur einer rotierenden Elektrode 9 befindet sich, wie hier dargestellt, der Radialrotor 27 unterhalb der rotierenden Elektrode 9. Bei mehreren rotierenden Elektroden ist es bevorzugt, wenn unterhalb oder oberhalb jeder rotierenden Elektrode ein Radialrotor angeordnet ist.

Neben einer Ausführungsform, wie sie in den Figuren 5 bis 8 dargestellt ist und bei der jeweils eine positive und eine negative Elektrode einen Korb 7, 7a, 7b bilden, ist es auch möglich, dass mehrere oder alle Elektroden 9, 9a, 9b, 11, 11a, 11b in einem gemeinsamen Korb enthalten sind. Unabhängig davon, ob die Vielzahl von Elektroden nur einen Korb bilden oder jeweils eine positive Elektrode und eine negative Elektrode einen Korb formen, können die Körbe - wie vorstehend beschrieben - Partikel oder eine strukturierte Packung enthalten, die gegebenenfalls katalytisch aktives Material enthält. Wenn mehrere Elektroden in einem Korb enthalten sind, ist es bevorzugt, wenn die Anzahl an positiven Elektroden und negativen Elektroden in einem Korb gleich groß ist.

Weiterhin können in allen Varianten die Abstände zwischen den positiven Elektroden 9, 9a, 9b und den negativen Elektroden 11, 11a, 11b jeweils gleich sein oder die Abstände zwischen der jeweils einen positiven Elektrode 9, 9a, 9b und negativen Elektrode 11, 11a, 11b, die einen Korb 7, 7a, 7b bilden, sind gleich und der Abstand zwischen den Körben 7, 7a, 7b ist ebenfalls jeweils gleich, unterscheidet sich aber vom Abstand zwischen den Elektroden, die jeweils einen Korb bilden.

Alternativ zu den in den Figuren 1 bis 8 dargestellten Anordnungen mit der positiven Elektrode 9, 9a, 9b und der negativen Elektrode 11, 11a, 11b können die Elektroden auch entgegengesetzt angeschlossen sein, so dass die hier dargestellte positive Elektrode die negative Elektrode ist und die hier dargestellte negative Elektrode die positive Elektrode.

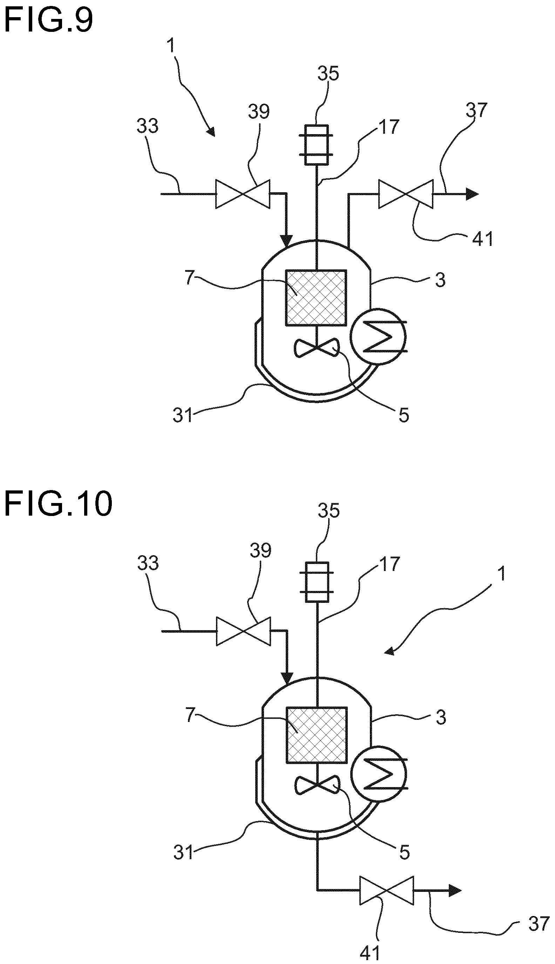

In den Figuren 9 und 10 sind zwei alternative Ausführungsformen einer als Rührkessel ausgebildeten Vorrichtung zur Untersuchung von Reaktionen dargestellt.

Die Vorrichtung 1 zur Untersuchung von elektrokatalytischen Reaktionen umfasst einen als Rührkessel ausgeführten Behälter 3 mit einem Rührer 5. Weiterhin sind im Behälter 3 die den Korb 7 bildenden Elektroden aufgenommen, wobei die Anordnung von Rührer 5 und Korb 7 einer der in den Figuren 1 bis 8 dargestellten entsprechen kann.

Um zusätzlich Wärme zuführen zu können, beispielsweise als Aktivierungsenergie oder bei einer endothermen Reaktion, oder insbesondere bei einer exothermen Reaktion Wärme abführen zu können, ist es bevorzugt, wenn der Behälter 3 temperierbar ist, beispielsweise, indem ein Doppelmantel 31 vorgesehen ist, der von einem Temperiermedium durchströmt werden kann. Alternativ zu einem Doppelmantel 31 ist es auch möglich, Rohrschlagen auf dem Behälter 3 aufzubringen, die von dem Temperiermedium durchströmt werden. Wenn Wärme zugeführt werden soll, kann neben einer Temperierung mit einem Temperiermedium auch eine elektrische Beheizung oder eine Beheizung mit einem Brenner vorgesehen sein, auch davon abhängig, ob eine Hochtemperaturreaktion oder eine Reaktion bei niedrigerer Temperatur in der Vorrichtung 1 durchgeführt werden soll.

Um Komponenten für die Reaktion zuführen zu können, weist der Behälter mindestens einen Zulauf 33 auf. Hierbei ist es möglich, nur einen Zulauf 33 vorzusehen, über den die Komponenten gemischt oder nacheinander zugeführt werden, oder für jede Komponente einen separaten Zulauf 33.

Um den Rotor 5 mit der Rotorachse 17 oder, wenn rotierende Körbe 7 vorgesehen sind, die Körbe 7 anzutreiben, ist die Rotorachse 17 mit einem Motor 35 verbunden.

Das im Behälter 3 entstehende Reaktionsgemisch wird über einen Ablauf 37 aus dem Behälter 3 entnommen. Dieser kann, wie in Figur 9 dargestellt, am Deckel des Behälters 3 angeordnet sein oder, wie in Figur 10 dargestellt, am Boden des Behälters 3.

Die Anordnung des Ablauf 37 am Deckel des Behälters 3 ist insbesondere dann bevorzugt, wenn bei der Reaktion ein gasförmiges Reaktionsprodukt entsteht. In diesem Fall kann zusätzlich ein Ablauf am Boden des Behälters vorgesehen sein, um flüssige Komponenten aus dem Behälter 3 entnehmen zu können. Alternativ zu einem Ablauf für flüssige Komponenten am Boden ist es auch möglich, ein Tauchrohr vorzusehen, das durch den Deckel in den Behälter 3 geführt ist und die flüssigen Komponenten durch das Tauchrohr zu entnehmen.

Die als Rührkessel ausgeführte Vorrichtung 1 kann kontinuierlich, semi-Batch-Betrieb oder im Batch-Betrieb betrieben werden. Bei einem kontinuierlichen Betrieb werden kontinuierlich Komponenten über den Zulauf 33 zugeführt und über den Ablauf 37 entnommen. Bei einem semi-Batch-Betrieb wird mindestens eine Komponente kontinuierlich zugeführt und mindestens eine Komponente vorgelegt. Das Produkt kann kontinuierlich entnommen werden oder alternativ nach einer vorgegebenen Zeit. Bei einem Batch-Betrieb werden zunächst alle Komponenten zugeführt, die Reaktion durchgeführt und dann nach Abschluss der Reaktion das Reaktionsprodukt entnommen.

Um die Zugabe der Komponenten regeln zu können, ist es bevorzugt im Zulauf 33 ein Ventil 39 vorzusehen, das jeweils dann geöffnet wird, wenn eine Komponente zugeführt werden soll. Entsprechend ist zur Regelung der Entnahme des Reaktionsprodukts ein Ventil 41 im Ablauf 37 vorgesehen. Bei einer kontinuierlichen Entnahme wird beispielsweise mit dem Ventil 41 der Reaktordruck und mit Ventil 39 der Zufluss geregelt. Bei einem Batchbetrieb ist das Ventil 41 geschlossen, solange die Reaktion durchgeführt wird und nach Abschluss der Reaktion wird das Ventil 41 geöffnet, um das Reaktionsgemisch aus dem Behälter 3 zu entnehmen. Ein nachlassender oder zunehmender Druck kann gegebenenfalls über das Ventil 39 nachgeregelt werden.

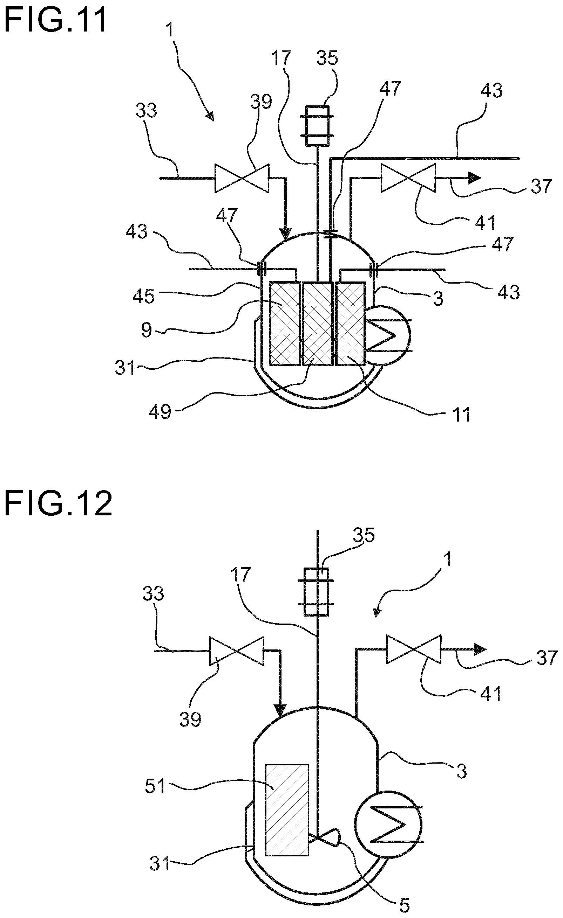

Figur 11 zeigt eine schematische Darstellung einer als Rührkessel ausgebildeten Vorrichtung zur Untersuchung von Reaktionen mit einer Anode, einer Kathode sowie einer Referenzelektrode.

Der Aufbau der in Figur 11 dargestellten Vorrichtung 1 entspricht im Wesentlichen der in Figur 9 dargestellten. Detaillierter ist hier der Anschluss der Elektroden 9, 11 gezeigt. Hierzu sind die Elektroden 9, 11 jeweils mit einem elektrischen Leiter 43 verbunden. Die elektrischen Leiter 43 werden durch die Wandung 45 des Behälters 3 geführt, wobei die Durchführungen 47 für die elektrischen Leiter 43 elektrisch isoliert sind, um zu verhindern, dass über die Behälterwandung Strom geleitet wird und dies möglicherweise zu einem unerwünschten Kurzschluss führt. Zudem wird hierdurch verhindert, dass Bedienpersonal, das mit dem Behälter in Kontakt kommt, durch einen elektrischen Schlag verletzt wird.

In der in Figur 11 dargestellten Ausführungsform ist zusätzlich eine Referenzelektrode 49 vorgesehen, die ebenfalls mit einem elektrischen Leiter 43 verbunden ist.

Die Referenzelektrode 49 erlaubt es, das elektrische Potential von Halbzellen gegenüber einem definierten Referenzpotential zu messen. Messungen der Potentialdifferenz zwischen der positiven und der negativen Elektrode gibt noch keine Hinweise auf das eigentliche Halbzellenpotential. Die Referenzelektrode 39 wird üblicherweise planparallel oder auch konzentrisch zur positiven oder zur negativen Elektrode angeordnet, zum Beispiel zwischen beiden Elektroden.

Um die Reaktion im Behälter beobachten zu können, kann in der Behälterwandung ein Sichtfenster 51 ausgebildet sein. Das Sichtfenster kann aus jedem optisch durchsichtigen Material gefertigt sein, zum Beispiel einem durchsichtigen Kunststoff oder Glas. Die Wahl des Materials für das Sichtfenster 51 ist dabei insbesondere abhängig von den zu untersuchenden Reaktionen und dem Druck und der Temperatur, bei denen die Reaktionen durchgeführt werden. Das Material muss sowohl eine ausreichende mechanische Stabilität aufweisen, um dem Druck standzuhalten als auch ausreichend temperaturstabil sein, um bei der im Reaktor auftretenden Temperatur nicht geschädigt zu werden. Zudem ist es auch notwendig, dass das Material für das Sichtfenster 51 inert ist gegenüber den Komponenten im Reaktionsgemisch im Behälter 3. Besonders bevorzugt wird als Material für das Sichtfenster 51 Glas verwendet.

## Patentansprüche

1. Vorrichtung zur Untersuchung elektrokatalytischer Reaktionen, umfassend einen Behälter (3) mit einem Rührer (5), **dadurch gekennzeichnet, dass** der Behälter (3) innen mit einer elektrisch isolierenden Beschichtung ausgekleidet ist oder aus einem elektrisch isolierenden Material gefertigt ist und der Rührer (5) zumindest eine mit einem elektrisch isolierenden Beschichtung versehenen oder aus einem elektrisch isolierenden Material gefertigte Rührerachse (17) aufweist und im Behälter (3) als auswechselbare Körbe (7; 7a; 7b) ausgeformte Elektroden (9, 9a, 9b; 11, 11a, 11b) positioniert sind.

2. Vorrichtung gemäß Anspruch 1, **dadurch gekennzeichnet, dass** die Elektroden (9, 9a, 9b; 11, 11a, 11b) makroporös oder mikroporös sind.

3. Vorrichtung gemäß Anspruch 1 oder 2, **dadurch gekennzeichnet, dass** jeweils eine positive Elektrode (9, 9a, 9b) und eine negative Elektrode (11, 11a, 11b) durch elektrisch nicht leitende Verbindungen zu einem Korb (7, 7a, 7b) verbunden sind.

4. Vorrichtung gemäß einem der Ansprüche 1 bis 3, **dadurch gekennzeichnet, dass** jeder Korb (7, 7a, 7b) mit einem katalytisch aktiven Material befüllt ist.

5. Vorrichtung gemäß einem der Ansprüche 1 bis 4, **dadurch gekennzeichnet, dass** die Körbe (7, 7a, 7b) jeweils als doppelwandige Elektroden (9, 9a, 9b; 11, 11a, 11b) ausgeführt sind, wobei zwischen den Elektroden (9, 9a, 9b; 11, 11a, 11b) eine Trennmembran aufgenommen ist.

6. Vorrichtung gemäß einem der Ansprüche 1 bis 5, **dadurch gekennzeichnet, dass** die Elektroden (9, 9a, 9b; 11, 11a, 11b) senkrecht zu einer zentralen Achse (15) durch den Behälter (3) angeordnet sind oder die zentrale Achse (15) des Behälters (3) radial umschließen.

7. Vorrichtung gemäß einem der Ansprüche 1 bis 6, **dadurch gekennzeichnet, dass** der Rührer (5) Rührerblätter aus einem elektrisch nicht leitenden Material aufweist.

8. Vorrichtung gemäß einem der Ansprüche 1 bis 5, **dadurch gekennzeichnet, dass** die als Körbe (7, 7a, 7b) ausgeformten Elektroden (9, 9a, 9b; 11, 11a, 11b) mit der Rührerachse (17) verbunden sind.

9. Vorrichtung gemäß Anspruch 8, **dadurch gekennzeichnet, dass** die mit der Rührerachse (17) verbundenen Elektroden (9, 9a, 9b; 11, 11a, 11b) senkrecht zur Rührerachse (17) angeordnet sind.

10. Vorrichtung gemäß Anspruch 9, **dadurch gekennzeichnet, dass** zwischen den senkrecht zur Rührerachse (17) angeordneten Elektroden (9, 9a, 9b; 11, 11a, 11b) Rührerblätter eines Radialrotors (27) angeordnet sind.

11. Vorrichtung gemäß Anspruch 8, **dadurch gekennzeichnet, dass** die mit der Rührerachse (17) verbundenen Elektroden (9, 9a, 9b; 11, 11a, 11b) als Rührerblätter wirken.

12. Vorrichtung gemäß einem der Ansprüche 1 bis 11, **dadurch gekennzeichnet, dass** im Behälter (3) Strombrecher angeordnet sind.

13. Vorrichtung gemäß Anspruch 12, **dadurch gekennzeichnet, dass** die Strombrecher als Elektroden ausgebildet sind.

## Claims

1. An apparatus for investigating electrocatalytic reactions comprising a container (3) having a stirrer (5), wherein the container (3) is internally lined with an electrically insulating coating or is manufactured from an electrically insulating material and the stirrer (5) has at least one stirrer shaft (17) provided with an electrically insulating coating or manufactured from an electrically insulating material and electrodes (9, 9a, 9b; 11, 11a, 11b) configured as exchangeable baskets (7; 7a; 7b) are positioned in the container (3).

2. The apparatus according to claim 1, wherein the electrodes (9, 9a, 9b; 11, 11a, 11b) are macroporous or microporous.

3. The apparatus according to claim 1 or 2, wherein in each case a positive electrode (9, 9a, 9b) and a negative electrode (11, 11a, 11b) are joined to form a basket (7, 7a, 7b) via electrically non-conductive joins.

4. The apparatus according to any of claims 1 to 3, wherein each basket (7, 7a, 7b) is filled with a catalytically active material.

5. The apparatus according to any of claims 1 to 4, wherein the baskets (7, 7a, 7b) are each configured as double-walled electrodes (9, 9a, 9b; 11, 11a, 11b), wherein a separating membrane is accommodated between the electrodes (9, 9a, 9b; 11, 11a, 11b).

6. The apparatus according to any of claims 1 to 5, wherein the electrodes (9, 9a, 9b; 11, 11a, 11b) are arranged perpendicularly to a central shaft (15) through the container (3) or radially encompass the central shaft (15) of the container (3).

7. The apparatus according to any of claims 1 to 6, wherein the stirrer (5) has stirrer blades made of an electrically non-conductive material.

8. The apparatus according to any of claims 1 to 5, wherein the electrodes (9, 9a, 9b; 11, 11a, 11b) configured as baskets (7, 7a, 7b) are joined to the stirrer shaft (17).

9. The apparatus according to claim 8, wherein the electrodes (9, 9a, 9b; 11, 11a, 11b) joined to the stirrer shaft (17) are arranged perpendicularly to the stirrer shaft (17).

10. The apparatus according to claim 9, wherein stirrer blades of a radial rotor (27) are arranged between the electrodes (9, 9a, 9b; 11, 11a, 11b) arranged perpendicularly to the stirrer shaft (17).

11. The apparatus according to claim 8, wherein the electrodes (9, 9a, 9b; 11, 11a, 11b) joined to the stirrer shaft (17) function as stirrer blades.

12. The apparatus according to any of claims 1 to 11, wherein baffles are arranged in the container (3).

13. The apparatus according to claim 12, wherein the baffles are configured as electrodes.

## Revendications

1. Dispositif pour l'étude de réactions électrocatalytiques, comprenant un récipient (3) avec un agitateur (5), **caractérisé en ce que** le récipient (3) est revêtu intérieurement d'un revêtement électriquement isolant ou est fabriqué en un matériau électriquement isolant et l'agitateur (5) présente au moins un axe d'agitateur (17) pourvu d'un revêtement électriquement isolant ou fabriqué en un matériau électriquement isolant et des électrodes (9, 9a, 9b; 11, 11a, 11b) sous forme de paniers interchangeables (7 ; 7a ; 7b) sont positionnées dans le récipient (3).

2. Dispositif selon la revendication 1, **caractérisé en ce que** les électrodes (9, 9a, 9b ; 11, 11a, 11b) sont macroporeuses ou microporeuses.

3. Dispositif selon la revendication 1 ou 2, **caractérisé en ce que** respectivement une électrode positive (9, 9a, 9b) et une électrode négative (11, 11a, 11b) sont reliées par des liaisons électriquement non conductrices à un panier (7, 7a, 7b).

4. Dispositif selon l'une quelconque des revendications 1 à 3, **caractérisé en ce que** chaque panier (7, 7a, 7b) est rempli d'un matériau catalytiquement actif.

5. Dispositif selon l'une quelconque des revendications 1 à 4, **caractérisé en ce que** les paniers (7, 7a, 7b) sont chacun réalisés sous forme d'électrodes à double paroi (9, 9a, 9b ; 11, 11a, 11b), une membrane de séparation étant logée entre les électrodes (9, 9a, 9b ; 11, 11a, 11b).

6. Dispositif selon l'une quelconque des revendications 1 à 5, **caractérisé en ce que** les électrodes (9, 9a, 9b ; 11, 11a, 11b) sont agencées perpendiculairement à un axe central (15) traversant le récipient (3) ou entourent radialement l'axe central (15) du récipient (3).

7. Dispositif selon l'une quelconque des revendications 1 à 6, **caractérisé en ce que** l'agitateur (5) présente des pales d'agitateur en un matériau non électriquement conducteur.

8. Dispositif selon l'une quelconque des revendications 1 à 5, **caractérisé en ce que** les électrodes (9, 9a, 9b ; 11, 11a, 11b) sous forme de paniers (7, 7a, 7b) sont reliées à l'axe d'agitateur (17) .

9. Dispositif selon la revendication 8, **caractérisé en ce que** les électrodes (9, 9a, 9b ; 11, 11a, 11b) reliées à l'axe d'agitateur (17) sont agencées perpendiculairement à l'axe d'agitateur (17).

10. Dispositif selon la revendication 9, **caractérisé en ce que** des pales d'agitateur d'un rotor radial (27) sont agencées entre les électrodes (9, 9a, 9b ; 11, 11a, 11b) agencées perpendiculairement à l'axe d'agitateur (17).

11. Dispositif selon la revendication 8, **caractérisé en ce que** les électrodes (9, 9a, 9b ; 11, 11a, 11b) reliées à l'axe d'agitateur (17) agissent comme des pales d'agitateur.

12. Dispositif selon l'une quelconque des revendications 1 à 11, **caractérisé en ce que** des briseurs de courant sont agencés dans le récipient (3).

13. Dispositif selon la revendication 12, **caractérisé en ce que** les briseurs de courant sont conçus sous forme d'électrodes.
